# EUROPEAN PATENT APPLICATION

(11) **EP 1 164 075 A1**
(43) Date of publication of application: **19.12.2001**
(21) Application number: 00112527.7
(22) Date of filing: 13.06.2000
(51) Int. Cl.: B62J 1/16

(54) **Baby bicycle seat with an adjustable safety bar and seat belts**

(71) Applicant: HAMAX AS, 1679 Krakeroy (NO)
(72) Inventor: Eskild, Asbjorn, 1675 Krakeroy (NO); Dag, Hoidal, 1675 Krakeroy (NO); Hermansen, Leif, 1684 Vesteroy (NO)
(74) Representative: Popp, Eugen, Dr.

(57) **Abstract**

The present invention provides an adjustable safety bar which can be mounted on a bicycle which more securely holds the baby in place during cycling and allows easy placement or removal of the baby into the baby seat. The baby seat (1) mountable on a bicycle comprising a seat body (6) and a safety bar (2) which is pivotably mounted on the seat body (6), the safety bar (2) having at least two operational positions, an open and a closed operational position, wherein the safety bar (2) comprises at least one side wall portion (3) which forms part of the side walls of the baby seat (1) in the closed operational position.

## Description

The invention relates to a safety bar for a baby seat for mounting on a bicycle. Particularly, the invention relates to an adjustable safety bar which is adjustable in a manner such that when the safety bar extends over the baby, side wall portions of the safety bar form part of the side walls of the baby seat and simultaneously seat belts are lowered over the baby.

A most important attribute of the use of a baby seat for mounting on a bicycle, is the safe securement of a baby during travel on a bicycle. When cycling or in the event of any sudden temporary translational or rotational aberration in cycling which may occur, for example by road surface or bumping into an obstacle/another cyclist, the cyclist must feel assured that the baby will be held in place in the baby seat and not topple over.

It is known to provide a safety bar pivotably mountable on the seat body, for example, DEG9405574.2, however this example inadequately secures the baby in place during travel on a bicycle. Further this example illustrates how difficult it is to use when placing and removing the baby into the baby seat since the presence side walls hinder the easy maneuverability of the baby.

The present invention seeks to provide an adjustable safety bar which can be mounted on a bicycle which more securely holds the baby in place during cycling and allows easy placement or removal of the baby into the baby seat. The baby is simultaneously held in place by the safety bar and seat belts which are interconnected with the safety bar. When the safety bar is not over the baby, it is easy to place a baby on the seat and easy to remove a baby from the seat. Thus, the present invention allows improved security and easy maneuverability of the baby into and out of the seat.

The adjustable safety bar in accordance with the invention has a number of advantages. The simple construction and design results in relatively cheap manufacture. For example, one single molding can be sufficient to produce the safety bar. The baby seat can be used with babies of a about a few months of age up until about 6 years old. The safety bar in combination with the safety belts enable safe securement of the baby during travel on a bicycle. In particular, the cyclist can rest assured that the baby will not fall out of the baby seat. The shape of the safety bar allows for a compact configuration when the safety bar is lowered over the baby since the safety bar forms the side walls of the baby seat. The locking means of the present invention does not necessitate the determination of the optimum position of the safety bar, a one position permanent lock safely secures the baby.

According to the present invention, an adjustable safety bar for a bicycle is provided as defined in Claims 1 to 22. The present invention is a baby seat mountable on a bicycle comprising a seat body and a safety bar which is pivotably mounted on the seat body, the safety bar having at least two operational positions, an open and a closed operational position, characterized in that the safety bar comprises at least one side wall portion which forms part of the side walls of the baby seat in the closed operational position. The side wall portion is a substantially planar plate extending from the safety bar. The safety bar comprises two side portions and a front portion wherein the side portion comprises an upper side portion and a lower side portion forming an angle at their connection of about 90 degrees. The upper side portion has an essentially arch-like shape. In the closed and open operational position the side wall portion extends downwardly from the lower side portion. The side wall portion is connected to the lower side portion at essentially an end portion thereof adjacent to the upper side portion. The side wall portion widens along its downward extension. The safety bar is pivotably mounted on a head portion of the seat body. The safety bar is pivotable about a pivot axis (X-Y) extending through the head portion. In the closed operational position the safety bar is placed over the seat body and that in the open operational position the safety bar is behind the seat body. The baby seat comprises a first locking means for locking the safety bar to the seat body. The first locking means for locking the safety bar to the seat body comprises a buckle means located on the front portion of the safety bar and a latch means which is located on the front part of the seat portion of the seat body. The baby seat comprises at least one seat belt.

The present invention is also a baby seat mountable on a bicycle, comprises a seat body and a seat belt characterized in that the baby seat further comprises a safety bar which is pivotably mounted on the seat body, the safety bar having at least two operational positions, an open and a closed operational position. The seat belt attached on either end to the baby seat. A first end of the seat belt is attached to the seat body and a second end of the seat belt is attached to the safety bar. The first end is attached at the back portion of the seat body and the second end is attached at the front portion of the safety bar. The baby seat comprises two seat belts which extend over the head portion in the open operational position and which extend over the back portion in the closed operational position. The baby seat comprises a tensioning means to place the seat belts under tension. The baby seat comprises a second locking means for locking the seat belts in a safety position. The first locking means are the second locking means and preferably comprise a buckle and latch mechanism. The safety bar conforms to the contour of the seat body in the closed operational position.

The invention will now be described by way of example and with reference to the accompanying drawings in which:
Fig. 1 illustrates a perspective view of a baby seat comprising a safety bar in a released operational position according to the present invention; and
Fig. 2 illustrates a side view of a baby in a baby seat in an upright position with a safety bar lowered over the baby in a closed operational position according to the present invention.

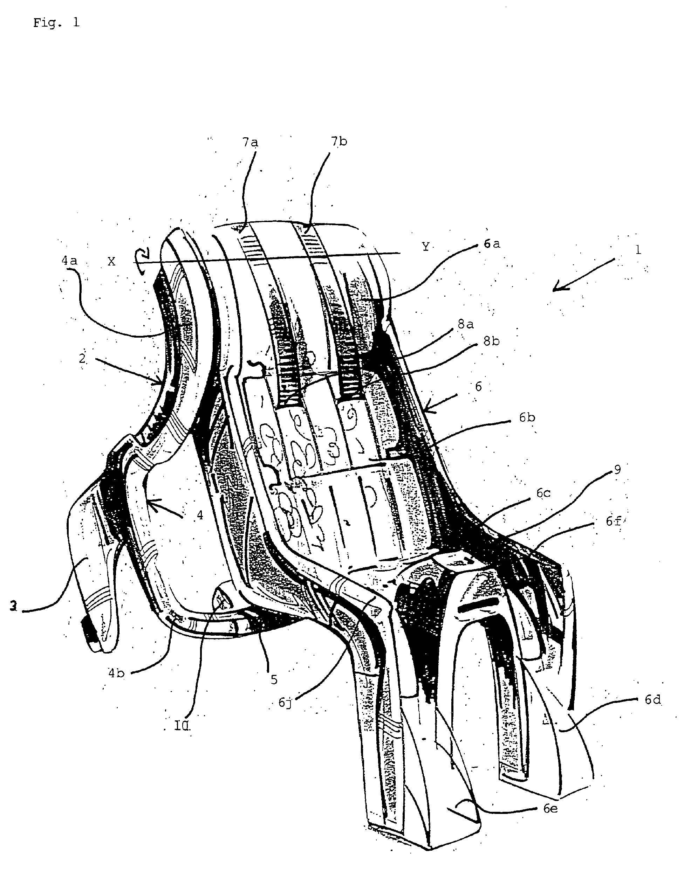

Fig. 1 illustrates a perspective view of a baby seat 1 comprising a safety bar 2 in a released operational position which can be mounted on a crossbar of the bicycle frame in an essentially vertical position according to the present invention. The baby seat 1 may alternatively be mounted above the front wheel, rear wheel or some suitable position. The baby seat 1 comprises a seat body 6 comprising a head portion 6a, back portion 6b, seat portion 6c, leg portions 6d, 6e and edge portions 6f, 6j. The safety bar 2 comprises two side portions 4 and a front portion 5. Each side portion 4 comprises an upper side portion 4a and lower side portion 4b. The upper side portion 4a and lower side portion 4b form an angle at their connection of about 90 degrees. The upper side portion 4a has an essentially arch-like shape. The side wall portions 3 are substantially planar plates which extend from the safety bar 2. The side wall portions 3 are shown extending downwardly from the lower side portion 4b. The side wall portions 3 are connected to the lower side portion 4b at essentially an end portion thereof adjacent to the upper side portion 4a. The side wall portion 3 widen along their downward extension. The safety bar 2 is pivotably mounted on the head portion 6a of the seat body 6, about a pivot axis X-Y extended through the head portion 6a.

The baby seat 1 also comprises first locking means comprising preferably a buckle means 10, located on the front portion 5 of the safety bar 2, and a latch means 9 located on the front part of the seat portion 6c of the seat body 6 for receiving the buckle means 10. Further, seat belts 7a, 7b are attached on either end of the baby seat 1. The first end of the seat belt 7a, 7b is attached at the back portion 6b of the seat body 6 and the second end is attached at the front portion 5 of the safety bar 2. The two seat belts 7a, 7b shown in Fig. 1 extend over the head portion and have tensioning means to place the seat belts 7a, 7b under tension. Furthermore, second locking means are provided for locking the seat belts 7a, 7b in a safety position.

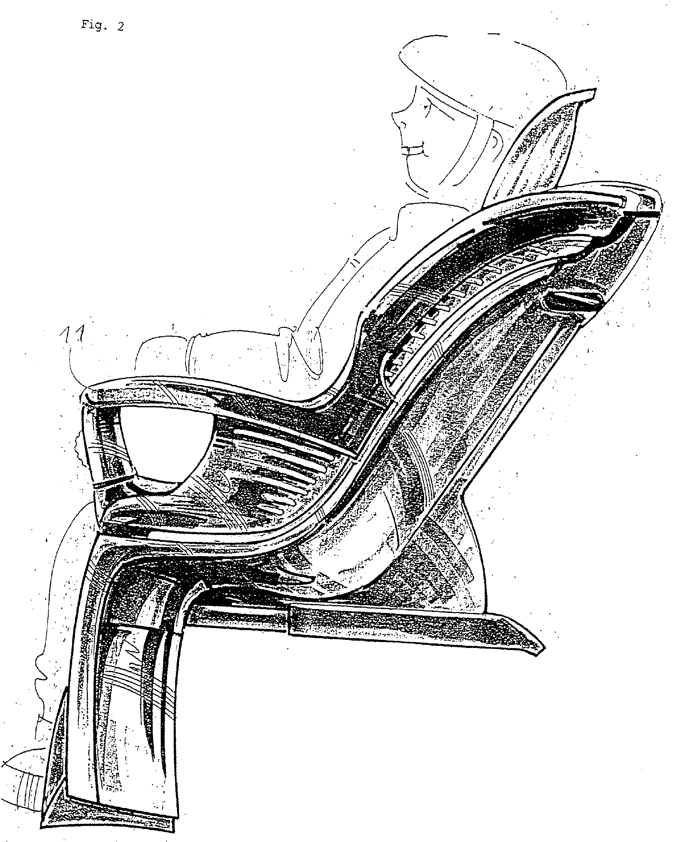

Fig. 2 illustrates a side view of a baby in a baby seat 1 with the safety bar 2 lowered over the baby in a closed operational position. The baby shown in Fig. 2 is in the upright position where the resting surface is inclined vertically relative to the rear portion as described in HAX-032-EP. In the closed operational position, the two side wall portions 3 are shown forming part of the side walls of the baby seat 1 such that the essentially L-shaped safety bar 2 conforms to the contour of the seat body 6 of the baby seat 1. The baby may rest his arms on the side wall portions 3 which form the side walls and the baby may rest his hands over the safety bar 2. The plurality of seat belts 7a, 7b extend over the back portion 6b and strap the baby securely in place. First locking means can coincide with the second locking means and preferably comprise a buckle and latch mechanism 9, 10 such that locking the safety bar 2 to the seat body 6 coincides with locking the seat belts 7a, 7b over the back portion 6b of the baby seat 1. When the buckle is inserted into the latch 9, 10 the lock mechanism 11 is located in between the leg portions 6d, 6e.

In the operation of the safety bar 2 of the present invention, two operational positions are defined, a closed operational position when the safety bar 2 is placed over the baby and a released operational position when the safety bar 2 is removed from the baby. The baby can be easily inserted into the baby seat when the safety bar 2 is in the released operational position since no side walls are present but mere edge portions 6f, 6j. After the baby is positioned into the baby seat the safety bar is pivotably rotated about an axis XY at the head portion 6a of the baby seat to the closed operational position whereby the seat belts are simultaneously lowered over the baby when the safety bar is placed over the baby. The safety bar 2 along with the seat belts 7a, 7b serve to secure the baby firmly in place.

While various features of the invention are described above, they can be readily combined with each other resulting in further embodiments of the invention.

## Claims

1. A baby seat (1) mountable on a bicycle comprising a seat body (6) and a safety bar (2) which is pivotably mounted on said seat body (6), said safety bar (2) having at least two operational positions, an open (Fig. 1) and a closed (Fig. 2) operational position,
**characterized in that**
said safety bar (2) comprises at least one side wall portion (3) which forms part of the side walls of the baby seat (1) in the closed operational position (Fig. 2).

2. The baby seat (1) according to Claim 1, **characterized in that** side wall portion (3) is a substantially planar plate extending from said safety bar (2).

3. The baby seat (1) according to Claims 1 or 2, **characterized in that** said safety bar (2) comprises two side portions (4) and a front portion (5) wherein said side portion (4) comprises an upper side portion (4a) and a lower side portion (4b) forming an angle at their connection of about 90 degrees.

4. The baby seat (1) according to any of Claims 1 to 3, **characterized in that** said upper side portion (4a) has an essentially arch-like shape.

5. The baby seat (1) according to any of Claims 1 to 4, **characterized in that** in the closed and open operational position said side wall portion (3) extends downwardly from said lower side portion (4b).

6. The baby seat (1) according to Claim 5, **characterized in that** said side wall portion (3) is connected to said lower side portion (4b) at essentially an end portion thereof adjacent to said upper side portion (4a).

7. The baby seat (1) according to any of Claims 1 to 6, **characterized in that** said side wall portion (3) widens along its downward extension.

8. The baby seat (1) according to any of Claims 1 to 7, **characterized in that** said safety bar (2) is pivotably mounted on a head portion 6a of said seat body (6).

9. The baby seat (1) according to any of Claims 1 to 8, **characterized in that** said safety bar (2) is pivotable about a pivot axis (X-Y) extending through the head portion (6a).

10. The baby seat (1) according to any of Claims 1 to 9, **characterized in that** in said closed operational position said safety bar (2) is placed over the seat body (6) and that in said open operational position said safety bar (2) is behind said seat body (6).

11. The baby seat (1) according to any of Claims 1 to 10, **characterized in that** said baby seat (1) comprises a first locking means for locking the safety bar (2) to the seat body (6).

12. The baby seat (1) according to any of Claims 1 to 11, **characterized in that** said first locking means for locking the safety bar (2) to the seat body (6) comprises a buckle means (10) located on the front portion (5) of said safety bar (2) and a latch means (9) which is located on the front part of said seat portion (6c) of said seat body (6).

13. The baby seat (1) according to any of Claims 1 to 12, **characterized in that** said baby seat (1) comprises at least one seat belt (7a, 7b).

14. A baby seat (1) mountable on a bicycle, in particular according to any of the preceding Claims, comprising a seat body (6) and a seat belt (7a, 7b)
**characterized in that**
said baby seat further comprises a safety bar (2) which is pivotably mounted on said seat body (6), said safety bar (2) having at least two operational positions, an open (Fig. 1) and a closed (Fig. 2) operational position.

15. The baby seat (1) according to Claim 13 or 14, **characterized in that** said seat belt attached on either end to the baby seat (1).

16. The baby seat (1) according to Claims 15, **characterized in that** a first end of said seat belt (7a, 7b) is attached to said seat body (6) and a second end of said seat belt (7a, 7b) is attached to said safety bar (2).

17. The baby seat (1) according to Claim 15 or 16, **characterized in that** said first end is attached at the back portion (6b) of said seat body (6) and said second end is attached at the front portion (5) of said safety bar (2).

18. The baby seat (1) according to any of Claims 13 to 17, **characterized in that** said baby seat comprises two seat belts (7a, 7b) which extend over the head portion in the open operational position and which extend over the back portion in the closed operational position.

19. The baby seat (1) according to any of Claims 13 to 18, **characterized in that** said baby seat (1) comprises a tensioning means to place said seat belts (7a, 7b) under tension.

20. The baby seat (1) according to any of Claims 13 to 19, **characterized in that** said baby seat (1) comprises a second locking means for locking the seat belts (7a, 7b) in a safety position.

21. The baby seat (1) according to Claim 20, **characterized in that** the first locking means are the second locking means and preferably comprise a buckle and latch mechanism (9, 10).

22. The baby seat (1) according to any of Claims 1 to 21, **characterized in that** said safety bar (2) conforms to the contour of said seat body (6) in the closed operational position.
